(19) Europäisches Patentamt / European Patent Office / Office européen des brevets

(11) **EP 1 431 255 B1**

(12) **EUROPÄISCHE PATENTSCHRIFT**

(45) Veröffentlichungstag und Bekanntmachung des Hinweises auf die Patenterteilung:
**17.09.2008   Patentblatt 2008/38**

(51) Int Cl.:
*C03C 3/095* (2006.01)      *C03C 4/00* (2006.01)

(21) Anmeldenummer: **03028927.6**

(22) Anmeldetag: **17.12.2003**

(54) **Blei- und bariumfreies Kristallglas**

Lead and barium-free crystal glass

Cristal sans plomb ni baryum

(84) Benannte Vertragsstaaten:
**AT BE BG CH CY CZ DE DK EE ES FI FR GB GR HU IE IT LI LU MC NL PT RO SE SI SK TR**

(30) Priorität: **17.12.2002   DE 10258923**

(43) Veröffentlichungstag der Anmeldung:
**23.06.2004   Patentblatt 2004/26**

(73) Patentinhaber: **F.X. Nachtmann Bleikristallwerke GmbH
92660 Neustadt a. d. Waldnaab (DE)**

(72) Erfinder:
• **Lenhart, Armin
  91077 Neunkirchen a. Brand (DE)**
• **Seufert, Marco, Dipl.-Ing.
  90489 Nürnberg (DE)**

(74) Vertreter: **Blaumeier, Jörg et al
LINDNER I BLAUMEIER
Patent- und Rechtsanwälte
Dr.-Kurt-Schumacher-Strasse 23
90402 Nürnberg (DE)**

(56) Entgegenhaltungen:
**WO-A-95/13993          US-A- 5 446 007**

**Beschreibung**

Die Erfindung betrifft ein blei- und bariumfreies Kristallglas zu manuellen oder maschinellen Herstellung hochwertiger Glasgegenstände mit einer Abbé-Zahl kleiner 48 und einem Brechungsindex von wenigstens 1,54.

Bleikristallglas ist eines der hochwertigsten Gläser mit spezifischen optischen Eigenschaften, vornehmlich einer niedrigen Abbé-Zahl sowie einem hohen Brechungsindex. Es weist in der Regel eine niedrige Schmelztemperatur auf und lässt sich aufgrund der chemischen Länge der Gläser sowohl maschinell als auch manuell sehr gut verarbeiten. Es ist jedoch auch bekannt, dass Bleiverbindungen, insbesondere das verwendete Bleioxid, giftig sind. Auch andere Oxide wie z.B. Bariumoxid stehen im Verdacht, gesundheitsschädlich zu sein und Krankheiten hervorzurufen. Aufgrund der chemischen Bedenklichkeit insbesondere des Blei-und Bariumoxids wird seit Jahren versucht, insbesondere das Bleioxid durch andere Oxide mit ähnlichen Eigenschaften zu ersetzen, wobei aufgrund technischer und ökonomischer Überlegungen primär auf Titanoxid als Ersatz zurückgegriffen wird.

Aus DE 199 36 699 C2 ist ein blei- und bariumfreies Kristallglas bekannt, bei dem Titanoxid bis maximal 8 Gew.% zugesetzt ist. Wenngleich das Titanoxid insbesondere in höherer Konzentration zu einer Schmelzpunkterniedrigung führt, geht mit einer Konzentrationserhöhung aber auch eine zunehmende Verfärbung einher, das Glas wird gelbgrün-stichig, bei hohen Konzentrationen geht die Missfärbung ins Braune. Das aus DE 199 36 699 C2 bekannte Glas, das auch einen beachtlichen Gehalt 2-wertiger Erdalkalien aufweist, ist insgesamt schwer zu entfärben, darüber hinaus können die eingangs genannten optischen Parameter mit einem solchen Glas nicht erreicht werden.

Aus GB 2 280 432 A ist eine bleifreie Alkalisilikatglas-Zusammensetzung zur Herstellung von Kristallglas mit einem Brechungsindex von 1,55 oder größer und einer Abbè-Zahl kleiner 52 bekannt, das $SiO_2$ zu 50 - 65 Gew.%, $M_2O$ zu 12 - 23 Gew.%, $Bi_2O_3$ zu 1 - 20 Gew.%, $TiO_2$ zu 1 - 15 Gew.% und SrO zu 1 - 20 Gew.% enthält, wobei M = Na, K oder Li ist.

Aus WO 95/13993 ist ein blei- und bariumfreies Glas bekannt, bei dem $TiO_2$ bis maximal 5 Gew. % zugesetzt ist und das 2-9 Gew. % CaO und 0,001-6 Gew.% MgO enthält.

Der Erfindung liegt das Problem zugrunde, ein dem gegenüber verbessertes Glas anzugeben.

Zur Lösung dieses Problems ist ein blei- und bariumfreies Kristallglas vorgesehen, welches enthält:

$SiO_2$:    55,0 - 68,0 Gew.%,
$TiO_2$:    8,5 - 14,0 Gew.%,
ZnO:    3,0 - 10,0 Gew.%,
$Er_2O_3$:    250 - 700 ppm,

und das bis auf einen Verunreinigungsgehalt frei von Calcium und Magnesium ist, sowie einen Rest an Verunreinigungen und ggf. sonstigen Zusätzen und/oder Wasser aufweist.

Das erfindungsgemäße blei- und bariumfreie Kristallglas enthält zum einen einen beachtlich hohen $TiO_2$-Gehalt, wobei das $TiO_2$ je nach Konzentration das $SiO_2$ entsprechend ersetzt. Hierdurch können sämtliche Vorteile des $TiO_2$ genutzt werden. Die nachteilige, mit zunehmender Konzentration zunehmende grüne Verfärbung wird durch entsprechende Zugabe von $Er_2O_3$ als Entfärbungsmittel kompensiert. Es hat sich herausgestellt, dass $Er_2O_3$ als zentrales Entfärbungsmittel eine wichtige Rolle spielt, da es als rotfärbendes Element eine Verschiebung in den Farblos- oder Unbuntpunkt zulässt.

Ferner ist von den 2-wertigen Erdalkalioxiden lediglich Zink in Form des ZnO vorgesehen, das erfindungsgemäße Kristallglas weist weder Calcium noch Magnesium - abgesehen von einem nicht beherrschbaren Verunreinigungsgehalt - auf. Es hat sich herausgestellt, dass Zinkoxid zu einer wesentlich geringeren Missfärbung führt, anders als MgO und CaO, die zu einer starken und schwer zu entfärbenden Missfärbung führen. Dies ist auf eine besondere Eigenschaft des ZnO zurückzuführen, die trotz seiner optischen Basizität gegeben ist, worauf nachfolgend noch eingegangen wird. Die sonstigen Zusätze können beliebiger Art sein und sollten nicht mehr als jeweils 0,5 Gew.% betragen.

Insgesamt lässt die Erfindung die Fertigung eines die hohen optischen Anforderungen erfüllenden Kristallglases zu, das keine Entfärbungsprobleme bietet und einem bekannten Bleikristaiigias in Bezug auf die optischen Eigenschaften gleichwertig ist. An dieser Stelle ist darauf hinzuweisen, dass - zusätzlich zu den oben beschriebenen Verbindungen - das Kristallglas selbstverständlich noch weitere Komponenten, z. B. in Form von Netzwerkbildnern, Netzwerkwandlern, Entfärbern etc. aufweist.

In weiterer Präzisierung des Erfindungsgedankens sollte das erfindungsgemäße Kristallglas $SiO_2$ zu 57 - 66 Gew.%, insbesondere 59 - 65 Gew.% und vorzugsweise 61 - 64 Gew.% sowie $TiO_2$ zu 8,5 - 12 Gew.%, insbesondere 9 - 11 Gew.% enthalten. Der Gehalt an ZnO kann weitergehend zu 5 - 10 Gew.%, insbesondere zu 6 - 9 Gew.% präzisiert werden. Daneben kann das erfindungsgemäße Kristallglas zusätzlich zu ZnO auch SrO bis maximal 5 Gew.% enthalten.

Wie bereits oben ausgeführt, enthält ein Kristallglas üblicherweise auch Netzwerkwandler. Das erfindungsgemäße Kristallglas sollte $Na_2O$ zu 5 - 12 Gew.% und $K_2O$ zu 9 - 15 Gew.% enthalten. Die Anteile können in Weiterbildung der Erfindung zu 6 - 10 Gew.% $Na_2O$, insbesondere 7 - 9 Gew.% $Na_2O$ und 10 - 14 Gew.% $K_2O$, insbesondere 11 - 13 Gew.% $K_2O$ präzisiert werden. Dabei ist es besonders vorteilhaft, wenn das Verhältnis $Na_2O:K_2O$ = 1:1 oder kleiner, insbesondere 1:1,5 oder 1:2 ist. Der Umstand, dass bevorzugt ein höherer $K_2O$-Anteil als $Na_2O$-Anteil vorgesehen ist, liegt auch hier in der Eigenschaft beider Verbindungen, zu einer Verfärbung des Glases zu führen, wobei der zu einer Missfärbung führende Einfluss des $Na_2O$ deutlich größer ist als der des $K_2O$, was wiederum auf die optische Basizität der Verbindungen zurückzuführen ist, und worauf nachfolgend noch eingegangen wird. Man nutzt das nicht-lineare Verhalten bezüglich der Färbewirkung der Na-K-Mischung bis zu 50 % des K-Anteils aus.

Wie bereits beschrieben, dient $Er_2O_3$ als Rotfärber, um den Grün-Anteil der $TiO_2$-induzierten Missfärbung zu entfärben. Nachdem $TiO_2$ auch zu einer starken Gelbfärbung führt, ist als weiteres Entfärbermittel CoO zu 0,1 - 6 ppm enthalten, welches als Blaufärber diesen Verfärbungsanteil kompensiert. Zusätzlich oder alternativ zu CoO kann erfindungsgemäß auch $Nd_2O_3$ zu 0,1 - 400 ppm enthalten sein. Auch $Nd_2O_3$ ist als Blaufärber zum Entfärben des Gelbanteils geeignet.

In Weiterbildung des Erfindungsgedankens sollte der Gehalt an $Fe_2O_3$ maximal 300 ppm, vorzugsweise weniger als 250 ppm betragen. Die Missfärbung ist auf die Bildung eines $TiO_2$-$Fe_2O_3$-Komplexes zurückzuführen. Infolgedessen ist beim erfindungsgemäßen Glas - das darauf abzielt, von Haus aus eine möglichst geringe Missfärbung bei gleichzeitiger Erzielung der angestrebten optischen Eigenschaften zu erzielen - ein von Haus aus möglichst niedriger Eisenanteil bevorzugt, vorzugsweise durch geeignete Rohstoffwahl. In Weiterbildung des Erfindungsgedankens kann vorgesehen sein, dass das Kristallglas $As_2O_3$ samt Oxidationsmittel bis maximal 1 Gew.% und/oder $Sb_2O_3$ samt Oxidationsmittel bis maximal 1,5 Gew.% oder die 5-wertige Stufe der entsprechenden Elemente bis maximal 1,5 Gew.% enthält. Arsen- und Antimonoxid werden einzeln oder kombiniert als Läutermittel eingesetzt, wobei ihre Summe vorzugsweise maximal 1,5 Gew.% betragen sollte. Bevorzugt wird Antimonoxid aufgrund seiner geringeren Giftigkeit eingesetzt. Die Konzentrationen sollten - nachdem sowohl Antimonoxid als auch Arsenoxid die Gelbfärbung verstärken - möglichst niedrig und nur in der für die Läuterung tatsächlich erforderlichen Größenordnung liegen. Es ist auch möglich, eine Läuterung mit $SnO_2$ oder Sulfat vorzunehmen.

Zweckmäßig ist es weiterhin, wenn das erfindungsgemäße Kristallglas einen Wassergehalt von 0,025 - 0,07 Gew.%, insbesondere von 0,035 - 0,06 Gew.% und vorzugsweise von 0,04 - 0,05 Gew.% enthält. Das Wasser in Verbindung mit dem hohen Titanoxidgehalt führt zu einer beachtlichen Erniedrigung der Schmelztemperatur. Wenngleich ein erhöhter Wassergehalt zu einem verstärkten Abdampfen der Alkali aus der Schmelze führt, was dem Grunde nach zu einer erhöhten Schlierenbildung im hergestellten Glas führt, kann das erfindungsgemäße Kristallglas gleichwohl einen hohen Wassergehalt aufweisen, da durch die vom erhöhten $TiO_2$-Gehalt herrührende Temperaturerniedrigung der erhöhten Verdampfungsneigung entgegengewirkt wird. Der $H_2O$-Gehalt wird vorzugsweise über wasserhaltige Rohstoffe wie Hydroxide, die Gemengefeuchte oder die Ofenbeheizung, vorzugsweise als Oxy-Fuel-Beheizung, eingestellt.

In Weiterbildung und Konkretisierung der Glaszusammensetzung kann das erfindungsgemäße Kristallglas enthalten:

| | |
|---|---|
| $SiO_2$ | 63,0 - 65,0 Gew.% |
| $TiO_2$ | 8,5 - 10,0 Gew.% |
| ZnO | 5,5 - 7,0 Gew.% |
| $Na_2O$ | 7,0 - 9,0 Gew.% |
| $K_2O$ | 11,0 - 13, 0 Gew.% |
| $Sb_2O_3$ | 0,6 - 0,7 Gew.% |
| CoO | 0,00025 - 0,00027 Gew.% |
| $Nd_2O_3$ | 0,004 - 0,006 Gew.% |
| $Er_2O_3$ | 0,032 - 0,034 Gew.% |

und einen Rest an Verunreinigungen und gegebenenfalls sonstigen Zusätzen und/oder Wasser. In weiterer Präzisierung kann das erfindungsgemäße Kristallglas enthalten:

| | |
|---|---|
| $SiO_2$ | 63,5 - 64,5 Gew.% |
| $TiO_2$ | 8,7 - 9,5 Gew.% |
| ZnO | 6,0 - 6,6 Gew.% |
| $Na_2O$ | 7,5 - 8,5 Gew.% |
| $K_2O$ | 11,5 -12,5 Gew.% |
| $Sb_2O_3$ | 0,62- 0,67 Gew.% |
| CoO | 0,000255 - 0,000265 Gew.% |

(fortgesetzt)

| | |
|---|---|
| $Nd_2O_3$ | 0,0045 - 0,0055 Gew.% |
| $Er_2O_3$ | 0,0325 - 0,0335 Gew.% |

und einen Rest an Verunreinigungen und gegebenenfalls sonstigen Zusätzen und/oder Wasser. Ferner kann in weiterer Eingrenzung der Gew.%-Intervalle das erfindungsgemäße Kristallglas enthalten:

| | |
|---|---|
| $SiO_2$ | 63,7 - 64,2 Gew.% |
| $TiO_2$ | 8,85 - 9,25 Gew.% |
| ZnO | 6,2 - 6,4 Gew.% |
| $Na_2O$ | 7,75 - 8,25 Gew.% |
| $K_2O$ | 11,75 - 12,25 Gew.% |
| $Sb_2O_3$ | 0,63- 0,66 Gew.% |
| CoO | 0,000255 - 0,000265 Gew.% |
| $Nd_2O_3$ | 0,0045 - 0,0055 Gew.% |
| $Er_2O_3$ | 0,0325 - 0,0335 Gew.% |

und einen Rest an Verunreinigungen und gegebenenfalls sonstigen Zusätzen und/oder Wasser. Schließlich weist eine besonders bevorzugte erfindungsgemäße Kristallglaszusammensetzung folgende Inhaltsstoffe auf:

| | |
|---|---|
| $SiO_2$ | 64,0 Gew.% |
| $TiO_2$ | 9,0 Gew.% |
| ZnO | 6,31 Gew.% |
| $Na_2O$ | 8,0 Gew.% |
| $K_2O$ | 12,0 Gew.% |
| $Sb_2O_3$ | 0,64 Gew.% |
| CoO | 0,00026 Gew.% |
| $Nd_2O_3$ | 0,005 Gew.% |
| $Er_2O_3$ | 0,033 Gew.% |

und einen Rest an Verunreinigungen und gegebenenfalls sonstigen Zusätzen und/oder Wasser.

Weitere Merkmale des erfindungsgemäßen Kristallglases ergeben sich aus der nachfolgenden Beschreibung sowie den Figuren. Dabei zeigen:

Fig. 1       ein Diagramm mit Transmissionskurven verschiedener $TiO_2$-Gläser mit unterschiedlichen $TiO_2$-Gehalten,

Fig. 2       ein Diagramm zur Darstellung der $TiO_2$-induzierten Missfärbung der Gläser aus Fig. 1,

Fig. 3       ein Diagramm zur Darstellung der Entfärbungswirkung von $Er_2O_3$ und CoO,

Fig. 4       ein Diagramm zur Darstellung der Gelb- und Grünanteile verschiedener Gläser bezogen auf ihre optische Basizität,

Fig. 5       ein Diagramm zur Darstellung des Einflusses sich ändernder $Na_2O$ und $K_2O$-Anteile im Glas,

Fig. 6       ein Diagram zur Darstellung der Abbe-Zahl mehrerer Gläser mit verschiedenen Gehalten an $TiO_2$, $Na_2O$/$K_2O$ und ZnO,

Fig. 7       ein Diagram zur Darstellung der Brechzahl mehrerer Gläser mit verschiedenen Gehalten an $TiO_2$, $Na_2O$/$K_2O$ und ZnO,

Fig. 8       ein Diagram zum Vergleich der Transmissionskurven eines Bleikristallglases mit Gläsern mit unterschiedlichen $TiO_2$-Gehalten,

Fig. 9    ein Diagram zum Vergleich der Transmissionskurven eines Bleikristallglases mit Gläsern mit unterschiedlichen ZnO-Gehalten, und

Fig. 10    ein Diagram zum Vergleich der Transmissionskurven eines Bleikristallglases mit Gläsern mit unterschiedlichen $Na_2O/K_2O$-Gehalten.

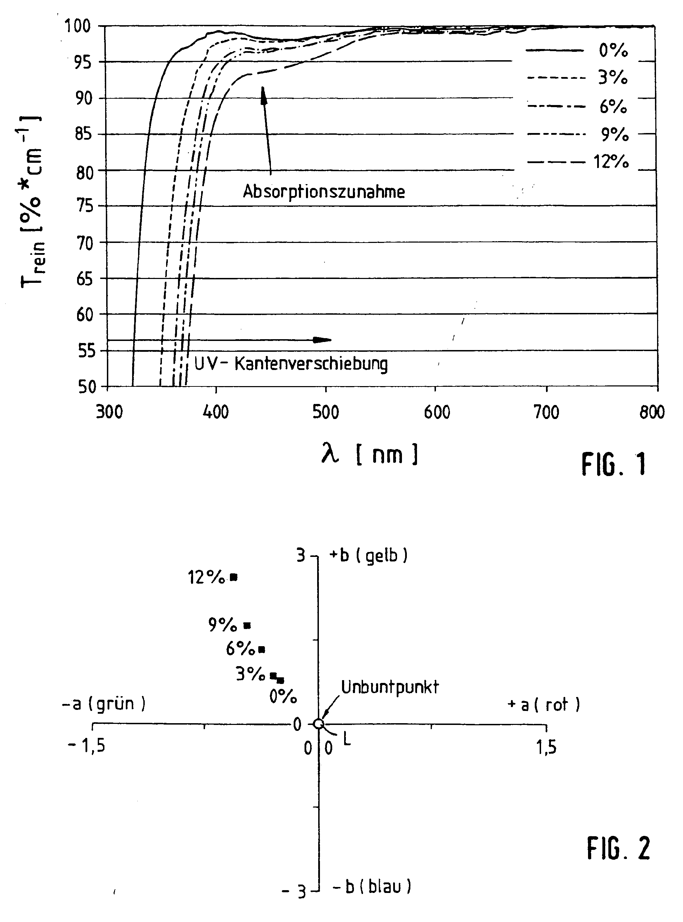

Wie eingangs erwähnt, ist es mit dem aus DE 199 36 699 C2 bekannten Ansatz mit einem Titangehalt von maximal 8 Gew.% nicht möglich, ein entfärbbares Kristallglas mit den geforderten optischen Eigenschaften herzustellen. Beim erfindungsgemäßen Glas werden infolgedessen höhere Titangehalte verwendet, die wie erwähnt jedoch zu zunehmender Missfärbung führen. Dies ergibt sich aus den Fig. 1 und 2. Fig. 1 zeigt für ausgewählte erfindungsgemäße Kristallgläser mit unterschiedlichen $TiO_2$-Gehalten das Reintransmissionsverhalten aufgetragen über die Wellenlänge, Fig. 2 zeigt in Form eines Diagramms die Farbortwerte der in Fig. 1 gezeigten Transmissionskurven.
Die dieser Untersuchung zugrunde liegenden Gläser hatten folgende Gehalte (Tabelle 1): - Vergleichsbeispiel -

| | |
|---|---|
| $SiO_2$ | 60 - 72 Gew.% |
| $TiO_2$ | 0 - 12 Gew.% |
| ZnO | 7,35 Gew.% |
| $Na_2O$ | 5 Gew.% |
| $K_2O$ | 15 Gew.% |
| $Sb_2O_3$ | 0,65 Gew.% |
| $Fe_2O_3$ | 80 ppm |
| Rest: Verunreinigungen | |

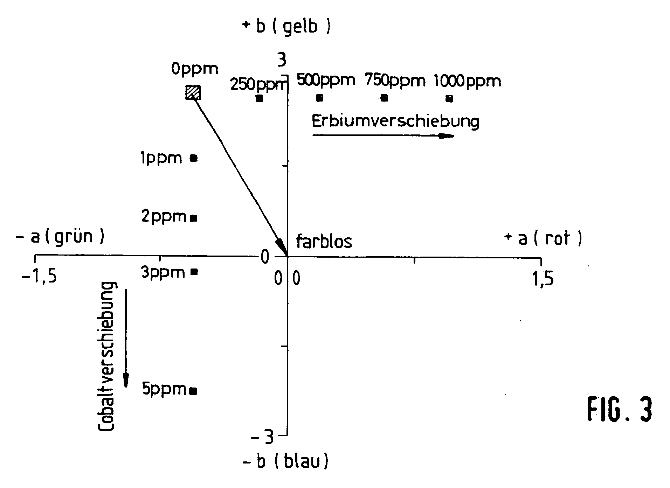

Fig. 1 enthält die Transmissionskurven fünf verschiedener Gläser mit der genannten Zusammensetzung, wobei der $TiO_2$-Gehalt 0 Gew.%, 3 Gew.%, 6 Gew.%, 9 Gew.% und 12 Gew.% betrug und jeweils im entsprechenden Maß im Austausch für $SiO_2$ eingesetzt wurde. Die Transmissionskurven wurden mit einem Spektrometer unter Zuhilfenahme einer Ullbrichtkugel gemessen. Die Kurven sind dickennormiert ($cm^{-1}$) und reflexionskorrigiert. Ersichtlich ist mit zunehmendem $TiO_2$-Gehalt eine UV-Kantenverschiebung in Richtung des sichtbaren Bereichs verbunden, ferner setzt eine Zunahme der Absorption im kurzwelligen Bereich des Lichtes ein. Beides ist ursächlich für die Entstehung der Missfärbung. Es wird blaues Licht absorbiert, was zu einem Gelbstich des Glases führt.
Um die Missfärbung zu quantifizieren, wurde eine Farbortbestimmung der Proben durchgeführt, wie sie in Fig. 2 gezeigt ist. Die der Farbortbestimmung zugrundeliegende Farbmetrik lässt es zu, Farben mit Maßzahlen zu quantifizieren. Ein Farbeindruck entsteht dadurch, dass ein Körper verschiedene Wellenlängen des sichtbaren Spektrums absorbiert und andere reflektiert. Ein z. B. grüner Körper absorbiert den roten und blauen Anteil des sichtbaren Spektrums, während er den grünen Lichtanteil reflektiert bzw. transmittiert. Grundlage jeder Farbmessung ist immer eine Transmissions- oder Reflexionsmessung. Der Darstellung gemäß Fig. 2 liegt das Hunter-System (Lab-System) zugrunde, das eine gute Möglichkeit zur Quantifizierung der Farbe darstellt. Die Darstellung aller sichtbaren Farben im Hunter-System führt zu einer Farbkugel, bestehend aus verschiedenen Farbebenen, auf denen die Helligkeitskoordinate L senkrecht steht. Die Helligkeit nimmt von unten (schwarz = O) nach oben (weiß = 100) zu. Die Koordinaten a und b geben Auskunft über den Farbton, wobei -a für Grün, +a für Rot, -b für Blau und +b für Gelb steht. Bei der in Fig. 2 gezeigten Darstellung wurde auf die Angabe der L-Koordinate verzichtet, da diese keine Auskunft über die Farbtendenzen gibt. In Fig. 2 steht L senkrecht auf dem Koordinatenursprung. Die a-Koordinate ist in Fig. 2 auf der x-Achse aufgetragen und variiert von negativen (Grün) bis zu positiven (Rot) Werten. Die b-Koordinate wird auf der y-Achse aufgetragen und variiert von negativen Werten (Blau) bis zu positiven Werten (Gelb). Im Nullpunkt liegt der sog. Farbneutralpunkt.
Wie Fig. 2 zu entnehmen ist, nimmt mit zunehmendem $TiO_2$-Gehalt auch die Gelbfärbung zu, wobei die Zunahme der Missfärbung zu Gelb stärker als die zu Grün ist (die Einheiten der a- und b-Achse stehen im Verhältnis 1: 2). Mit zunehmendem $TiO_2$-Gehalt muss also das Glas immer stärker entfärbt werden, wobei die Entfärbung mit zunehmendem $TiO_2$-Gehalt immer stärker die beiden Missfärbungsanteile "Gelb" und "Grün" berücksichtigen muss. Bei zu starker Entfärbung des Glases vergraut dieses, die Qualität nimmt ab.
Aus der Farbortbestimmung gemäß Fig. 2 ergibt sich, dass zur Entfärbung des Titanglases mit einer Mischfärbung bestehend aus den Farben Gelb und Grün die Farben Rot und Blau erforderlich sind. Als zentraler Entfärber wurde $Er_2O_3$ als Rotfärber gewählt, da diese Verbindung eine "sicherere" Entfärbung (Redoxzustand) als die Selententfärbung gewährleistet. Wenngleich auch Selen als Entfärber verwendet werden kann, ist die Entfärbung auf Selenbasis nicht unproblematisch, da bereits kleinste Veränderungen der Schmelzbedingungen und Formgebung zu einem Farbumschlag nach Rot führen können. Selen kann im Glas die Wertigkeitsstufen von -2 bis +6 einnehmen.
Als Blaufärber wird vorzugsweise CoO gewählt, das eine primäre Verschiebung nach Blau bewirkt. Dem Grundsatz nach ergibt sich - siehe Fig. 3 - der Grad der Entfärbung als resultierender Vektor der jeweiligen Zugabe an Erbium- und Kobalt-Entfärber. Fig. 3 zeigt als Beispielgrafik schematisch ausgehend von einem Glas gemäß obiger Zusammensetzung mit einem $TiO_2$-Gehalt von 12 Gew.%, wie sich der Grad der Entfärbung mit zunehmender Zugabe von Erbiumoxid und Kobaltoxid bis in den Farbnullpunkt führen lässt. Die für Erbium angegebenen Mengenzusätze sind aufgrund des niedrigen Extinktionskoeffizienten des Erbiums erheblich größer als die des Kobalt. In Realität wird sich jedoch keine lineare Verschiebung ergeben, da Erbium den Farbort nicht nur nach Rot, sondern auch etwas nach Blau verschiebt, d. h. der Entfärbungsvektor verläuft nicht achsparallel, sondern führt zu einer Rot-Blau-Verschiebung mit einem Schwerpunkt nach Rot. Entsprechendes gilt für die Kobaltentfärbung, auch diese verschiebt nicht linear nach Blau, sondern auch etwas nach Grün, wobei der Schwerpunkt hier in der Blauverschiebung liegt. Insgesamt ergibt sich jedoch ein linearer Zusammenhang zwischen Färbung und Entfärbungsmittelkonzentration. In Kenntnis dieser Zusammenhänge kann ausgehend von der Kenntnis des $TiO_2$-Gehalts und des Eisen-Gehalts (wie beschrieben ist das Eisen mitverantwortlich für die Verfärbung in Folge einer Komplexbildung) die zuzugebende Menge an Erbium- und Kobaltentfärber genau berechnet und eingestellt werden. Beispielsweise ist ein Kristallglas mit 9 % $TiO_2$ und einer Eisenkonzentration von 70 ppm mit 350 ppm Erbium-, 2,3 ppm Kobalt- und 40 ppm Neodymoxid entfärbbar, wobei anstelle des Neodymoxids auch der Kobaltoxidgehalt etwas erhöht werden kann. Wichtig ist festzuhalten, dass sich hochtitanhaltige Gläser - wozu Gläser mit 8,5 Gew.% $TiO_2$ und mehr zählen - wie oben nachgewiesen nicht ohne einen Rotfärber (Erbium oder ggf. Selen) entfärben lassen.

Wie eingangs beschrieben soll das erfindungsgemäße Kristallglas zum einen magnesium- und calciumfrei sein, zum anderen soll Natrium und Kalium in den angegebenen Gewichtsprozentbereichen vorliegen und insbesondere ein Überschuss an Kalium im Vergleich zu Natrium gegeben sein. Dieses Erfordernis liegt in der unterschiedlichen Wirkung der Elemente bzw. ihrer Oxide bezogen auf die Missfärbung des Glases begründet. Die Oxide haben jeweils unterschiedliche optische Basizitäten, wobei diese optische Basizität wiederum ein Maß für die Polarisierung des Sauerstoffs im Glas ist, was wiederum ein Maß für die letztendliche, auf das $TiO_2$ zurückzuführende Missfärbung ist.

Im Glas herrscht eine Mischform von kovalenter und ionogener Bindung zwischen den Netzwerkelementen vor. Die optische Basizität ist dabei eine Maßzahl für den Anteil ionogener bzw. kovalenter Bindungen im Glas. Somit ist die optische Basizität ebenso ein Maß für die Polarisierung des Sauerstoffs im Glas. Die als Netzwerkbildner ausgewiesenen Oxide weisen in der Regel einen hohen kovalenten Bindungsanteil auf, während die als Netzwerkwandler bezeichneten Oxide einen hohen ionogenen Bindungsanteil aufweisen. Die Zwischenoxide liegen mit ihren Werten zwischen denen der Netzwerkwandler und Netzwerkbildner. Die optische Basizität wird in der Regel nach Duffy bestimmt, der eine dem Fachmann bekannte Vorgehensweise zur Ermittlung der Basizitätswerte definiert hat.

Zur Untersuchung der unterschiedlichen Einflüsse ein- und zweiwertiger Alkali-und Erdalkalioxide auf den Grad der Missfärbung wurden unterschiedliche Gläser folgender Zusammensetzung hergestellt, wobei in den nachfolgenden Tabellen die Angaben sowohl in Gewichts- wie auch in Mol-% sind. Die Angaben in Mol-% sind zur Bestimmung der Basizitätswerke nach Duffy erforderlich.

Gläser mit verschiedenen Alkalioxiden (Tabelle 2) - Vergleichsbeispiele -

|  | Mol-% | Gew.% mit $Na_2O$ | Gew.% mit $K_2O$ | Gew.% mit $Rb_2O$ | Gew,% mit $Cs_2O$ |
|---|---|---|---|---|---|
| $SiO_2$ | 63,85 | 59,61 | 54,68 | 44,17 | 36,91 |
| $TiO_2$ | 8 | 9,93 | 9,1 | 7,35 | 6,15 |
| ZnO | 10 | 12,65 | 11,59 | 9,37 | 7,82 |
| $Na_2O$ | 0 - 18 | 17,32 | -- | -- | -- |
| $K_2O$ | 0 - 18 | -- | 24,17 | -- | -- |
| $Rb_2O$ | 0 - 18 | -- | -- | 38,73 | -- |
| $Cs_2O$ | 0 - 8 | -- | -- | -- | 48,8 |
| $Sb_2O_3$ | 0,1 | 0,45 | 0,42 | 0,34 | 0,28 |
| $Fe_2O_3$ | 100 ppm | 200 ppm | 200 ppm | 200 ppm | 200 ppm |
| Rest | Verunreinigung | Verunreinigung | Verunreinigung | Verunreinigung | Verunreinigung |

Gläser mit verschiedenen Erdalkalioxiden (Tabelle 3) - Vergleichsbeispiele -

|  | Mol-% | Gew.% mit MgO | Gew.% mit CaO | Gew.% mit SrO | Gew,% mit ZnO |
|---|---|---|---|---|---|
| $SiO_2$ | 63,85 | 63,67 | 62,04 | 57,61 | 59,61 |
| $TiO_2$ | 8 | 10,6 | 10,33 | 9,6 | 9,93 |
| ZnO | 0 - 10 | -- | -- | -- | 12,65 |
| MgO | 0-10 | 6,68 | -- | -- | -- |

(fortgesetzt)

Gläser mit verschiedenen Erdalkalioxiden (Tabelle 3) - Vergleichsbeispiele -

| | Mol-% | Gew.% mit MgO | Gew.% mit CaO | Gew.% mit SrO | Gew,% mit ZnO |
|---|---|---|---|---|---|
| CaO | 0-10 | -- | 9,07 | -- | -- |
| SrO | 0-10 | -- | -- | 15,55 | -- |
| $Na_2O$ | 18 | 18,52 | 18,04 | 16,76 | 17,32 |
| $Sb_2O_3$ | 0,1 | 0,48 | 0,47 | 0,44 | 0,45 |
| $Fe_2O_3$ | 100 ppm | 300 ppm | 300 ppm | 200 ppm | 200 ppm |
| Rest | Verunreinigung | Verunreinigung | Verunreinigung | Verunreinigung | Verunreinigung |

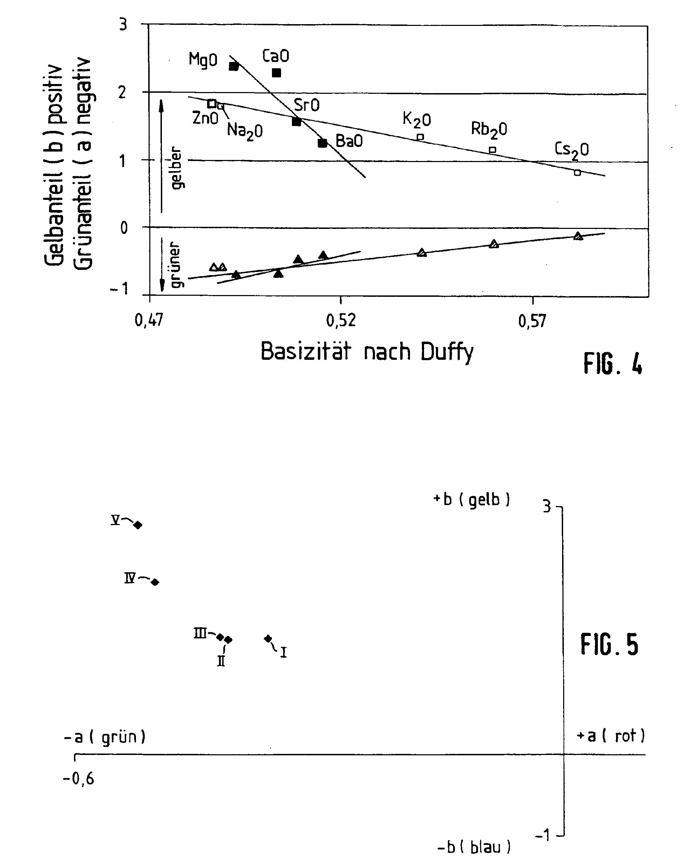

Zu den ein- und zweiwertigen Oxiden wurde jeweils die Basizität nach Duffy berechnet. Ferner wurden farbmetrisch die Farborte der Missfärbung der jeweiligen Gläser auf Basis einer Transmissionsmessung vorgenommen. In Fig. 4 sind der Grünanteil (a) als negativer Wert und der Gelbanteil (b) als positiver Wert der einzelnen Oxide über die errechnete Basizität aufgetragen.

a) Alkalireihe

Innerhalb der Alkalireihe wurden vier Gläser gemäß obiger Zusammensetzung mit unterschiedlichen Alkalioxid-Zusätzen von 18 Mol-% $Na_2O$, 18 Mol-% $K_2O$, 18 Mol-% $Rb_2O$ oder 18 Mol-% $Cs_2O$ untersucht. Wie Fig. 4 zu entnehmen ist, hängt die $TiO_2$-oxidbedingte Missfärbung auch stark von dem jeweils verwendeten Alkalioxid ab. Hierbei besteht ein Zusammenhang derart, dass mit zunehmender Basizität die Missfärbung abnimmt. Wenngleich sich mit den Alkalioxiden $Rb_2O$ und $Cs_2O$ die geringste Missfärbung erzielen lässt, kommen diese Oxide bei der Kristallglasfertigung nicht zum Einsatz, da sie sehr teuer sind. Dem gegenüber bieten sich $Na_2O$ und $K_2O$ als Alkalioxide an, wobei offensichtlich die Missfärbung bei Verwendung von Kaliumoxid geringer ist aufgrund der höheren optischen Basizität des $K_2O$. Dargestellt ist immer der jeweilige Gelbanteil (an der y-Achse nach oben aufgetragen) und der Grünanteil (an der y-Achse nach unten aufgetragen). Die verschiedenen Anteile eines Oxids sind immer übereinander dargestellt.

Ein ähnlicher Zusammenhang, nämlich dass mit einer steigenden Basizität eine Abnahme der Missfärbung einhergeht, lässt sich auch bei den 2-wertigen Erdalkalioxiden feststellen. Untersucht wurden hier Gläser mit MgO, CaO, SrO und BaO, zu denen jeweils die Basizität nach Duffy berechnet wurden. Diese nehmen von MgO über CaO und SrO zu BaO zu, wie Fig. 4 zeigt. In gleichem Maß nimmt der Missfärbungsanteil sowohl im gelben wie im grünen Bereich ab, das heißt auch hier gilt der Zusammenhang, dass mit steigender Basizität die Missfärbung abnimmt. Die vier erschmolzenen Gläser enthielten jeweils 10 Mol-% des jeweiligen Oxids.

Untersucht wurde ferner der Einfluss des ebenfalls 2-wertigen Zinks, das ebenfalls zu 10 Mol-% zugegeben wurde. Ersichtlich liegt die optische Basizität des ZnO deutlich niedriger als die der üblicherweise zugesetzten Magnesium- und Calciumoxide. Gleichwohl ist - entgegen dem oben beschriebenen Zusammenhang - trotz deutlich niedrigerer Basizität im Vergleich zu MgO und CaO der Grad der Missfärbung deutlich geringer als im Vergleich zu MgO und CaO. Wie Fig. 4 zu entnehmen ist, ist der Einfluss des ZnO dem des $Na_2O$ ähnlich, soweit es den Gelb- und Grünanteil betrifft. Infolgedessen ist das erfindungsgemäße Merkmal, auf MgO und CaO - abgesehen von unweigerlichen Verunreinigungen - zu verzichten und stattdessen ausschließlich ZnO als 2-wertiges Oxid zuzugeben, ein zentrales, der Entfärbung zuträgliches Merkmal.

Aus Fig. 4 ergibt sich also, dass die Missfärbung der Gläser direkt mit der optischen Basizität nach Duffy korreliert werden kann, soweit es die Alkali- und Erdalkalioxide betrifft. Es besteht also ein direkter Zusammenhang zwischen der optischen Basizität und der Missfärbung der Gläser. Dieser Zusammenhang muss bei der Komposition des Grundglases beachtet werden. Prinzipiell lässt sich festhalten, dass in Gläsern mit hohem kovalenten Bindungsanteil die Missfärbung stark und in Gläsern mit niedrigem kovalenten und hohem ionogenen Bindungsanteil niedrig ausgeprägt ist. Die Ausnahme bildet, dem direkten Zusammenhang zuwiderlaufend, das ZnO, das infolgedessen Glasbestandteil ist.

Wie Fig. 4 zu entnehmen ist, zeigen $Na_2O$ und $K_2O$ ein unterschiedliches Verhalten in ihrem Einfluss auf die Missfärbung. Wie deutlich unterschiedlich der jeweilige Einfluss ist ergibt sich aus Fig. 5. In Fig. 5 werden fünf Gläser mit unterschiedlichem Gehalt an $Na_2O/K_2O$ dargestellt. Die Gläser hatten folgende Zusammensetzung (Tabelle 4): - Vergleichsbeispiel -

| | |
|---|---|
| $SiO_2$ | 63,0 Gew.% |
| $TiO_2$ | 9,0 Gew.% |
| ZnO | 7,35 Gew.% |
| $Na_2O$ | 0 - 20 Gew.% |

(fortgesetzt)

| | |
|---|---|
| $K_2O$ | 0 - 20 Gew.% |
| $Sb_2O_3$ | 0,65 Gew.% |
| $Fe_2O_3$ | 80 ppm. |
| Rest: Verunreinigungen | |

Der $Na_2O/K_2O$-Gehalt der fünf Gläser betrug (Tabelle 5):

| Glasnummer | $Na_2O$ Gew.% | $K_2O$ Gew.% |
|---|---|---|
| I | 0 | 20 |
| II | 5 | 15 |
| III | 10 | 10 |
| IV | 15 | 5 |
| V | 20 | 0 |

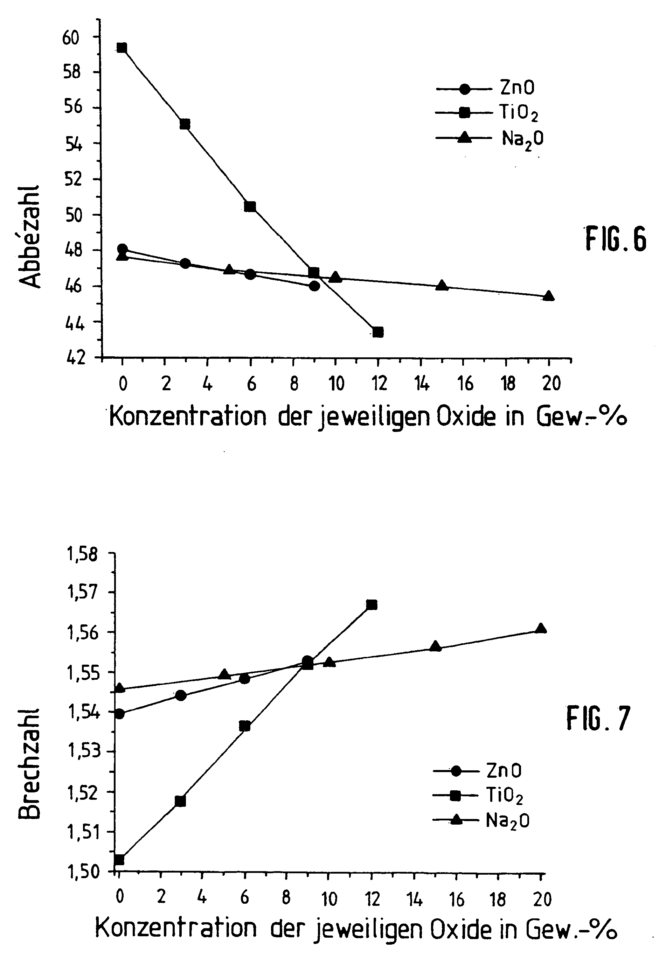

Zu sämtlichen Gläsern wurden wiederum Transmissionsmessungen durchgeführt und anhand dieser eine Farbortbestimmung mit dem Hunter-System (Lab-System) durchgeführt. Die Farborte der unterschiedlichen Gläser sind Fig. 5 zu entnehmen. Dort sind zu den einzelnen Farborten jeweils die Nummern des jeweiligen Glases, wie sie der obigen Tabelle mit den $Na_2O/K_2O$-Verhältnissen zu entnehmen sind, angegeben. Ersichtlich zeigen die Gläser I - III eine noch relativ geringe Gelb-Grün-Verfärbung, wobei sich die Verfärbung von Glas I bis Glas III primär nur in Richtung grün verschiebt. Das Glas I ist $Na_2O$-frei, das Glas II beinhaltet $Na_2O$ : $K_2O$ im Verhältnis 1 : 3 und das Glas III beinhaltet $Na_2O$ : $K_2O$ im Verhältnis 1 : 1. Mit zunehmendem $Na_2O$-Anteil nimmt dann aber die Verfärbung sprunghaft in Richtung gelb zu, das heißt es zeigt sich ein nicht-lineares Verhalten anstelle eines erwarteten linearen Zusammenhangs. Das heißt, mit einem höheren $Na_2O$-Anteil als dem $K_2O$-Anteil setzt eine deutliche Farbverschlechterung ein. Infolgedessen sollte das Verhältnis $Na_2O$ : $K_2O$ minimal 1 : 1, vorzugsweise aber kleiner und damit zu Gunsten des $K_2O$ sein. Durch das Verhältnis Na : K kann auch die Viskositätskurve der Titangläser in einem weiten Bereich gezielt eingestellt werden.
Wie beschrieben ist es Ziel der Erfindung, ein Kristallglas mit einer Abbé-Zahl kleiner 48 und einem Brechungsindex von wenigstens 1,54 anzugeben. Diese optischen Parameter sind mit dem Erfordernis der geringen Eigenfärbung der Kristallgläser in Einklang zu bringen. Fig. 6 zeigt den Zusammenhang zwischen der Abbé-Zahl und der jeweiligen Oxidkonzentration der verschiedenen Gläser. Dargestellt sind insgesamt 14 verschiedene Gläser, bei denen der Gehalt an $TiO_2$, $Na_2O$ (und damit auch $K_2O$ im Austausch) und ZnO variiert wurde. Die Zusammensetzungen waren wie folgt:

Gläser mit variiertem $TiO_2$-Gehalt (Tabelle 6): - Vergleichsbeispiel -

| | |
|---|---|
| $SiO_2$ | 60 - 72 Gew.% |
| $TiO_2$ | 0 - 12 Gew.% |
| ZnO | 7,35 Gew.% |
| $Na_2O$ | 5 Gew.% |
| $K_2O$ | 15 Gew.% |
| $Sb_2O_3$ | 0,65 Gew.% |
| $Fe_2O_3$ | 80 ppm, |
| Rest: Entfärber und Verunreinigungen | |

wobei $TiO_2$ im Austausch gegen $SiO_2$ zugefügt wurde.

Gläser mit variiertem $Na_2O$-Gehalt (Tabelle 7): - Vergleichsbeispiel -

| | |
|---|---|
| $SiO_2$ | 63,0 Gew.% |
| $TiO_2$ | 9 Gew.% |
| ZnO | 7,35 Gew.% |
| $Na_2O$ | 0 - 20 Gew.% |
| $K_2O$ | 0 - 20 Gew.% |
| $Sb_2O_3$ | 0,65 Gew.% |

(fortgesetzt)

Gläser mit variiertem $Na_2O$-Gehalt (Tabelle 7): - Vergleichsbeispiel -

| $Fe_2O_3$ | 80 ppm, |
|---|---|
| Rest: Entfärber und Verunreinigungen | |

wobei $Na_2O$ und $K_2O$ in 5 Gew.%-Schritten gegeneinander getauscht wurden.

Gläser mit variiertem ZnO-Gehalt (Tabelle 8): - Vergleichsbeispiel -

| $SiO_2$ | 70,25 - 61,25 Gew.% |
|---|---|
| $TiO_2$ | 9 Gew.% |
| ZnO | 0 - 9 Gew.% |
| $Na_2O$ | 8 Gew.% |
| $K_2O$ | 12 Gew.% |
| $Sb_2O_3$ | 0,65 Gew.% |
| $Fe_2O_3$ | 80 ppm, |
| Rest: Entfärber und Verunreinigungen | |

wobei ZnO in 3 Gew.%-Schritten für $SiO_2$ eingesetzt wurde.

Wie Fig. 2 zeigt sind wenigstens 8,5 Gew.%, vorzugsweise aber wenigstens 9 Gew.% $TiO_2$ erforderlich, um die geforderte Abbé-Zahl von 48 zu unterschreiten. Die Gläser mit variierrtem ZnO- und $Na_2O$-Gehalt wurden jeweils mit einem $TiO_2$-Gehalt von 9 Gew.% erschmolzen und liegen ebenfalls unterhalb der gewünschten Abbé-Zahl von 48.

Fig. 7 zeigt die Brechzahlen zu den oben angegebenen Gläsern. Auch hier ist ersichtlich, dass die gewünschte Brechzahl mit einem $TiO_2$-Gehalt von 8,5 und mehr, vorzugsweise 9 Gew.% auch unter Variation der ZnO- und $Na_2O$-Gehalte erreicht werden kann.

Nachfolgend werden einige Beispiele für ausgewählte erfindungsgemäße Gläser gegeben.

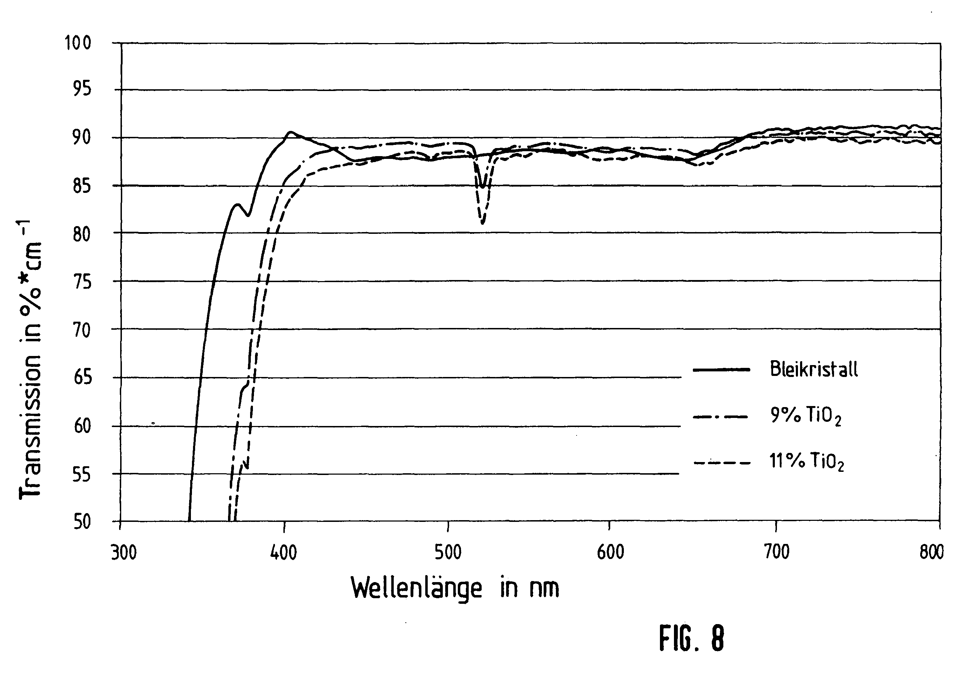

Fig. 8 zeigt die Transmissionskurven zweier erfindungsgemäßer Kristallgläser mit unterschiedlichem $TiO_2$-Gehalt im Vergleich zu einem üblichen, die gesetzlichen Erfordernisse erfüllenden Bleikristallglas. Der nachfolgenden Tabelle ist die jeweilige Glaszusammensetzung zu entnehmen (Tabelle 9):

| | jeweilige Glaszusammensetzung | | |
|---|---|---|---|
| Oxid | PbO - Vergleichsbeispiel - | $TiO_2$ 9 % | $TiO_2$ 11 % |
| $SiO_2$ | 60,40 | 63,00 | 61,00 |
| $B_2O_3$ | 0,77 | - | - |
| $TiO_2$ | - | 9,00 | 11,00 |
| ZnO | 1,10 | 7,25 | 7,25 |
| PbO | 24,30 | - | - |
| $Na_2O$ | 5,25 | 8,00 | 8,00 |
| $K_2O$ | 7,75 | 12,00 | 12,00 |
| $As_2O_3$ | 0,15 | - | - |
| $Sb_2O_3$ | 0,23 | 0,65 | 0,65 |
| NiO | 0,0013 | - | - |
| CoO | - | 0,00025 | 0,00028 |
| $Nd_2O_3$ | - | 0,005 | 0,005 |
| $Er_2O_3$ | - | 0,032 | 0,038 |
| $Fe_2O_3$ | 0,0125 | 0,008 | 0,008 |
| Summe | 99,96 | 99,95 | 99,95 |
| Rest auf 100 = Verunreinigungen | | | |

Sämtliche Angaben in obiger Tabelle sind in Gew.%. Die erfindungsgemäßen Kristallgläser weisen zum einen $TiO_2$ zu 9 Gew.%, zum anderen zu 11 Gew.% auf. ZnO ist jeweils konstant zu 7,25 Gew.%, $Na_2O$ und $K_2O$ zu jeweils 8,0 Gew.% bzw. 12,0 Gew.%. Ersichtlich wurde bei dem 11 %igen $TiO_2$-Glas zur Entfärbung etwas mehr CoO und $Er_2O_3$ zur Entfärbung zugegeben.

Wie aus der Transmissionskurve zu entnehmen ist, ist das Transmissionsverhalten der erfindungsgemäßen Kristallgläser dem eines üblichen Bleikristallglases sehr ähnlich. Der bei ca. 520 nm auftretende scharfe Peak ist auf die Wirkung des $Er_2O_3$ zurückzuführen.

Der nachfolgenden Tabelle sind die optischen und physikalischen Daten dieser drei Gläser zu entnehmen (Tabelle 10):

| | Daten der Gläser | | |
|---|---|---|---|
| Oxid | PbO - Vergleichsbeispiel - | $TiO_2$ 9 % | $TiO_2$ 11 % |
| Abbézahl | 46,7 | 46,6 | 45,1 |
| Brechzahl | 1,549 | 1,551 | 1,554 |
| Dichte | 2,93 | 2,63 | 2,66 |
| hydr. Kl. | 3 | 3 | 3 |
| $T_{Glasübergang}$ | 480 | 532 | 543 |
| $T_{Littelton}$ | 649 | 715 | 718 |
| $T_{Einsinkpunkt}$ | 970 | 1010 | 1002 |

Wie der Tabelle zu entnehmen ist weisen beide $TiO_2$-Gläser Abbé-Zahlen kleiner 47 auf. Die Abbé-Zahl des 9 %igen $TiO_2$-Glases beträgt 46,6, die des 11 %igen $TiO_2$-Glases 45,1. Auch die Brechzahlen liegen mit 1,551 für das 9 %ige $TiO_2$-Glas bzw. 1,554 für das 11 %ige $TiO_2$-Glas oberhalb des angestrebten Mindestwertes.

Die Dichte der $TiO_2$-Gläser, die im Auftriebsverfahren bestimmt wurde, liegt mit 2,63 $g/cm^3$ bzw. 2,66 $g/cm^3$ etwas niedriger als beim Bleikristallglas, was auf das $TiO_2$ zurückzuführen ist. Gleichwohl nimmt mit zunehmendem $TiO_2$-Gehalt die Dichte zu, was darauf zurückzuführen ist, dass das $SiO_2$ durch das $TiO_2$ mit einer Dichte von etwa 4 $g/cm^3$ ersetzt wird.

Ferner sind sowohl für das Bleikristallglas wie auch für die $TiO_2$-Gläser die hydrolytischen Klassen angegeben. Die hydrolytische Klasse ist ein Maß für die Beständigkeit eines Glases gegenüber einem Angriff aus der wässrigen Lösung. Ein solcher Angriff kann z. B. beim Waschen des Glases in der Spülmaschine erfolgen. Der Angriff des Wassers erfolgt in der Regel in zwei Schritten: Beim Angriff von reinem Wasser findet zunächst der beim Säureangriff beobachtete Auslaugungsprozess statt. Hier werden Alkaliione wie z. B. $Na^+$ und $K^+$ durch $H^+$ ersetzt. Dies führt zur Abnahme des $H^+$ im reinen Wasser, so dass dieses alkalisch wird. In der Folge kommt es im zweiten Schritt zu einem alkalischen Angriff, wobei das Netzwerk aufgelöst wird. Die hydrolytische Klasse wurde gemäß DIN-Norm durch Kochen von Glasgries einer vorgegebenen Kornfraktion (0,315 - 0,5 mm) der oben genannten Zusammensetzungen in deionisiertem Wasser für eine Stunde bestimmt. Das Wasser wird hierbei immer alkalischer. Am Ende des Kochvorgangs wird die Lösung von Glasgries getrennt und durch Titration von 0,1 N HCl mit einem Indikator auf den ursprünglichen pH-Wert zurücktitriert. Die verbrauchte Menge an HCl ist ein Maß für die im Wasser gelösten Alkalien. Anhand des titrierten Säureverbrauchs in ml/g Glasgries kann nun die hydrolytische Klasse bestimmt bzw. das Basenäquivalent angegeben werden. Bei einem Säureverbrauch von 0,2 ml/g bis 0,85 ml/g Glasgries ergibt sich ein Basenäquivalent von 62 bis 264 $\mu$g /g Glasgries und damit die hydrolytische Klasse 3, die auch das zum Vergleich untersuchte Bleikristallglas wie üblich zeigt. ZnO ist der chemischen Beständigkeit in Bezug auf die 2-wertigen Elemente besonders zuträglich. Wird der ZnO-Gehalt zu stark reduziert, verschlechtert sich die chemische Beständigkeit erheblich. Auch $TiO_2$ verbessert die chemische Beständigkeit erheblich. Dadurch ist die die hohe hydrolytische Beständigkeit und die hohe Säure- und Laugenbeständigkeit der Gläser mit so hoher Alkalikonzentration zu erklären.

Ferner sind drei die Viskosität der jeweiligen Gläser bestimmende Temperaturen angegeben, nämlich zum einen die Glasübergangs-Temperatur, zum anderen die Littelton-Temperatur sowie die Temperatur am Einsinkpunkt. Die Bestimmung der Viskosität bzw. der genannten Temperaturen erfolgte mittels der Vogel-Fulcher-Tammann-Gleichung gemäß DIN und ASTM-Standards. Die Vogel-Fulcher-Tammann-Gleichung lautet:

$$\log \eta = A + \frac{B}{T - T_0},$$

wobei

$\eta$ die Viskosität in dPas, A, B und To definierte Viskositäts-Temperaturfixpunkte darstellen. Es sind also drei Viskositätsmessungen bei verschiedenen Temperaturen notwendig. Bei den zu bestimmenden Werten der Viskositätskurve handelt es sich um die Transformations-, die Littelton- und die Einsinktemperatur, deren Viskositäten mit

$\eta_{T9} = 10^{13}$,
$\eta_{Littelton} = 10^{7,6}$ und
$\eta_{Einsinkpunkt} = 10^{4,22}$ dPas

definiert sind.

Zur Bestimmung des Transformationspunktes wurde ein Netzsch-Dilatometer verwendet. Hierbei wird eine Glasprobe in Stäbchenform einem definierten Temperaturprogramm (DIN) unterzogen. Mit Hilfe der Messkurve kann der Transformationspunkt, auch Glasübergangspunkt genannt, bestimmt werden.

Der Litteltonpunkt wird mit Hilfe eines in seinen Abmaßen definierten Glasfadens, der in einem Rohrofen einem definierten Temperaturprogramm unterzogen wird, ermittelt. Der Glasfaden verlängert sich hierbei unter Eigengewicht in Abhängigkeit von Temperatur und Zeit. Die Temperatur, bei der der Faden eine Verlängerung von 1 mm/min erfährt entspricht der Viskosität von $\eta = 10^{7,6}$ dPas.

Die Festlegung des Einsinkpunktes geht auf Dietzel und Brückner zurück. Hierbei wird für die Viskositätsbestimmung das Einsinken eines definierten Metallstäbchens in eine Glasschmelze festgelegt. Der Einsinkpunkt ist diejenige Temperatur, bei der ein Pt/Rh-Stäbchen (80 : 20) von 0,5 mm Durchmesser und 0,746 g Gewicht (Länge 20 cm) für eine Einsinktiefe von 2 cm die Zeit von 2 Minuten benötigt.

Die ermittelten Temperaturen sind der obigen Tabelle zu entnehmen. Es hat sich herausgestellt, dass $TiO_2$ die Hochtemperaturviskosität deutlich senkt und gleichzeitig die Niedertemperaturviskosität erhöht. Das heißt, dass der Schmelzpunkt mit steigenden Titankonzentrationen zu niedrigen Temperaturen wandert, während die Glasübergangstemperaturen zunehmen. Dies führt zu einem chemisch sehr kurzen Glas und hat erhebliche Bedeutung für die Verarbeitbarkeit der Gläser. Hohe Glasübergangstemperaturen lassen auf hohe Kühltemperaturen und hohe Formentemperaturen schließen. Mittels der relativ hohen Alkalikonzentration im erfindungsgemäßen Glas und der gezielten Ausnutzung des Mischoxideffekts $K_2O/Na_2O \sim 1$ kann die Glasübergangstemperatur auf Werte kleiner 550° C reduziert werden und somit die Formgebung und Kühlung des Glases realisiert werden. Das erfindungsgemäße Kristallglas schmilzt also für ein Glas ohne Blei und Barium bei sehr niedrigen Temperaturen, so dass es in vollelektrisch beheizten Wannen erschmolzen werden kann.

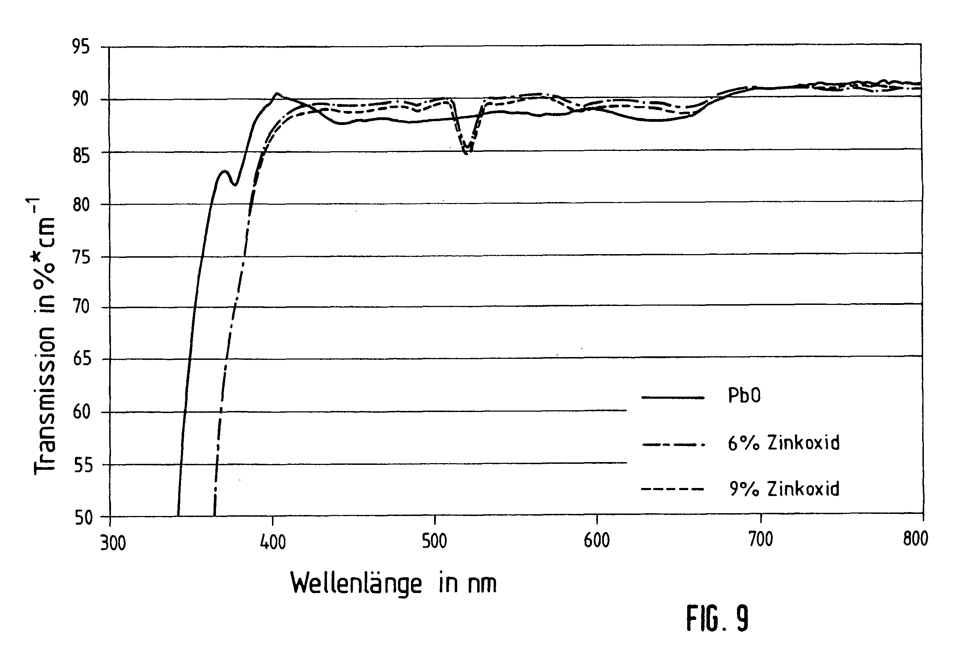

Fig. 9 zeigt Transmissionskurven zweier erfindungsgemäßer Kristallgläser mit variiertem ZnO-Gehalt im Vergleich zu einem üblichen Bleikristallglas. Die jeweiligen Zusammensetzungen sind der nachfolgenden Tabelle zu entnehmen (Tabelle 11):

| Oxid | jeweilige Glaszusammensetzung | | |
| --- | --- | --- | --- |
|  | PbO - Vergleichsbeispiel - | ZnO 6 % | ZnO 9 % |
| $SiO_2$ | 60,40 | 64,25 | 61,25 |
| $B_2O_3$ | 0,77 | - | - |
| $TiO_2$ | - | 9,00 | 9,00 |
| ZnO | 1,10 | 6,00 | 9,00 |
| PbO | 24,30 | - | - |
| $Na_2O$ | 5,25 | 8,00 | 8,00 |
| $K_2O$ | 7,75 | 12,00 | 12.00 |
| $As_2O_3$ | 0,15 | - | - |
| $Sb_2O_3$ | 0,23 | 0,65 | 0,65 |

(fortgesetzt)

| Oxid | jeweilige Glaszusammensetzung | | |
|---|---|---|---|
| | PbO - Vergleichsbeispiel - | ZnO 6 % | ZnO 9 % |
| NiO | 0,0013 | - | - |
| CoO | - | 0,00024 | 0,00026 |
| $Nd_2O_3$ | - | 0,005 | 0,005 |
| $Er_2O_3$ | - | 0,031 | 0,035 |
| $Fe_2O_3$ | 0,0125 | 0,008 | 0,008 |
| Summe | 99,96 | 99,94 | 99,95 |
| | Rest auf 100 = Verunreinigungen | | |

Auch hier sind die Angaben in Gew.%. Der ZnO-Gehalt beträgt beim einen Glas 6 Gew.%, beim anderen 9 Gew.%, es wurde gegen $SiO_2$ ausgetauscht. Auch hier ist ersichtlich, dass das Transmissionsverhalten dem des üblichen Bleikristallglases sehr ähnlich ist.

Die optischen und physikalischen Daten dieser Gläser sind der nachfolgenden Tabelle zu entnehmen (Tabelle 12):

| Oxid | Daten der Gläser | | |
|---|---|---|---|
| | PbO - Vergieichsbeispiei - | ZnO 6 % | ZnO 9 % |
| Abbézahl | 46,7 | 46,8 | 46,1 |
| Brechzahl | 1,549 | 1,549 | 1,553 |
| Dichte | 2,93 | 2,62 | 2,65 |
| hydr. Kl. | 3 | 3 | 3 |
| $T_{Glasübergang}$ | 480 | 530 | 534 |
| $T_{Littelton}$ | 649 | 712 | 719 |
| $T_{Einsinkpunkt}$ | 970 | 1013 | 1007 |

Auch hier liegt die jeweilige Abbé-Zahl unterhalb des geforderten Werts von 48, sie beträgt beim 6 %igen ZnO-Glas 46,8 und beim 9 %igen ZnO-Glas 46,1. Auch die Brechzahl erfüllt die gestellte Anforderung, sie liegt mit 1,549 für das 6 %ige ZnO-Glas und 1,553 für das 9 %ige ZnO-Glas über den geforderten 1,54. Die Dichte ist ähnlich der Dichte der beschriebenen Gläser mit variiertem $TiO_2$-Gehalt. Entsprechendes gilt für die hydrolytische Klasse. Auch die das Viskositätsverhalten definierenden Temperaturen liegen in ähnlichen Bereichen.

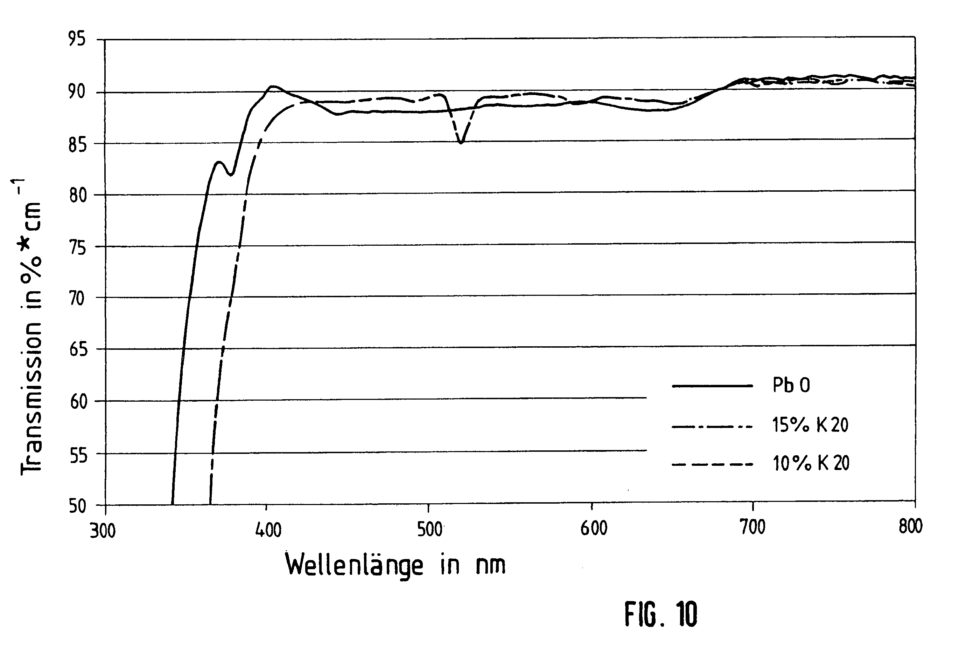

Schließlich zeigt Fig. 10 das Transmissionsverhalten zweier erfindungsgemäßer Gläser mit variierten $Na_2O$- und $K_2O$-Anteilen im Vergleich zu einem üblichen Bleikristallglas. Die Glaszusammensetzungen sind wie folgt (Tabelle 13).

| Oxid | jeweilige Glaszusammensetzung | | |
|---|---|---|---|
| | PbO - Vergleichsbeispiel - | $K_2O$ 15 % | $K_2O$ 10 % |
| $SiO_2$ | 60,40 | 63,00 | 63,00 |
| $B_2O_3$ | 0,77 | - | - |
| $TiO_2$ | - | 9,00 | 9,00 |
| ZnO | 1,10 | 7,25 | 7,25 |
| PbO | 24,30 | - | - |
| $Na_2O$ | 5,25 | 5,00 | 10,00 |

(fortgesetzt)

| Oxid | jeweilige Glaszusammensetzung | | |
|---|---|---|---|
| | PbO - Vergleichsbeispiel - | $K_2O$ 15 % | $K_2O$ 10 % |
| $K_2O$ | 7,75 | 15,00 | 10,00 |
| $As_2O_3$ | 0,15 | - | - |
| $Sb_2O_3$ | 0,23 | 0,65 | 0,65 |
| NiO | 0,0013 | - | - |
| CoO | - | 0,00025 | 0,00025 |
| $Nd_2O_3$ | - | 0,005 | 0,005 |
| $Er_2O_3$ | - | 0,033 | 0,033 |
| $Fe_2O_3$ | 0,0125 | 0,008 | 0,008 |
| Summe | 99,96 | 99,95 | 99,95 |
| | Rest auf 100 = Verunreinigungen | | |

Auch hier sind die Angaben in Gew.%. Der Gesamtgehalt an Alkalioxiden beträgt 20 Gew.%, wobei beim einen Glas $Na_2O$ zu 5 Gew.%, $K_2O$ zu 15 Gew.% und beim anderen Glas $Na_2O$ und $K_2O$ jeweils zu 10 Gew.% vorlagen. Wie Fig. 10 zu entnehmen ist, verlaufen die Transmissionskurven beider Gläser annähernd deckungsgleich und entsprechen im Wesentlichen dem Transmissionsverhalten des üblichen Bleikristallglases.

Die optischen und physikalischen Daten dieser Gläser sind der nachfolgenden Tabelle zu entnehmen (Tabelle 14):

| Oxid | Daten der Gläser | | |
|---|---|---|---|
| | PbO - Vergleichsbeispiel - | $K_2O$ 15 % | $K_2O$ 10 % |
| Abbézahl | 46,7 | 46,5 | 46,1 |
| Brechzahl | 1,549 | 1,550 | 1,552 |
| Dichte | 2,93 | 2,62 | 2,64 |
| hydr. Kl. | 3 | 3 | 3 |
| $T_{Glasübergang}$ | 480 | 550 | 521 |
| $T_{Littelton}$ | 649 | 742 | 705 |
| $T_{Einsinkpunkt}$ | 970 | 1024 | 994 |

Auch hier ist ersichtlich, dass die Abbé-Zahlen mit 46,5 % für das Glas mit 15 Gew.% $K_2O$ und 5 Gew.% $Na_2O$ bzw. 46,1 % für das Glas mit jeweils 10 Gew.% $K_2O$ und $Na_2O$ deutlich unterhalb der geforderten 48 liegen. Auch die Brechzahl liegt mit 1,550 bzw. 1,552 im geforderten Bereich. Die Dichte entspricht im Wesentlichen der der vorher beschriebenen unterschiedlichen Gläser (siehe Tabelle 12), Entsprechendes gilt für die hydrolytische Klasse. Jedoch zeigt sich ein deutlicher Einfluss des Verhältnisses der Alkalieinwaagen zueinander auf die viskositätsbestimmenden Temperaturen. Die Erhöhung der Natriumkonzentration von 5 Gew.% auf 10 Gew.% führt zu einer Erniedrigung der Viskosität im Niedrig- und Hochtemperaturbereich. Infolgedessen sollte - nachdem vor allem eine niedrige Glasübergangstemperatur vorzugsweise kleiner gleich 550° C erzielt werden sollte, das Verhältnis $K_2O$ : $Na_2O$ 1 : 1 bis maximal 3 : 1, vorzugsweise im Bereich 2 : 1 sein.

Insgesamt lässt die Erfindung die Herstellung eines farbarmen Titanglases mit hervorragenden optischen Eigenschaften und sehr guter Verarbeitbarkeit zu. Die jeweiligen Oxidanteile sind dazu in den angegebenen Bereichen einzustellen. Die Siliziumkonzentration sollte möglichst hoch sein, auch sind Alkalien hoher Basizität, nämlich primär K und Na mit einem Übergewicht an K zu verwenden, das heißt K : Na (molar) $\geq$ 1 : 1. Die Alkalienkonzentration sollte in Gew.% in der Summe etwa 18 bis 22 Gew.% betragen, um den Glasübergangstemperaturwert zu senken. Ferner sollte die Alkalikonzentration im oben angegebenen Bereich bis maximal 24 Gew.% liegen, da höhere Konzentrationen zu einer sich verschlechternden chemischen Beständigkeit führen. Das Glas muss Mg- und Ca-frei sein, an deren Stelle ist Zn zu verwenden, gegebenenfalls kann auch Sr eingesetzt werden. Die Konzentration an 2-wertigen Elementen sollte maximal 10 Gew.% betragen. Der Antimon- und Arsengehalt sollte möglichst gering und nicht höher als für die Läuterung tatsächlich erforderlich sein. Die Eisenkonzentration soll möglichst gering sein, damit das Glas ohne Probleme entfärbbar ist. Die Entfärbung erfolgt allein unter Verwendung eines Rot- und Blaufärbers, wozu primär Erbium und Kobalt oder gegebenenfalls Neodym verwendet werden. Unter Beachtung dieser Zusammenhänge ist es problemlos möglich, Gläser mit $TiO_2$-Gehalten bis zu 14 Gew.% zu erschmelzen, zu entfärben und zu verarbeiten.

Abschließend ist noch auf die Möglichkeit folgender Zugaben zum erfindungsgemäßen Glas zu verweisen:

Eine Zugabe von Phosphat kann bis zu 3 Gew.% erfolgen, da Phosphat in einigen Zusammensetzungsbereichen eine entfärbende Wirkung zeigt, wodurch die Gelbfärbung nochmals verringert werden kann, was insbesondere bei hohen Titankonzentrationen zweckmäßig ist. Boroxid kann bis zu 1,5 Gew.% zugegeben werden, um das Abschmelzen des Gemenges zu verbessern und um die chemische Beständigkeit des Glases zu erhöhen. Aluminiumoxid kann bis 1,5 Gew.% zugegeben werden, um den Angriff auf das Feuerfestmaterial des Ofens bei Bedarf zu verringern und die Entglasungstendenz (Kristallisationsneigung) der Schmelze zu verringern. Titangläser zeigen eine höhere Kristallisationsneigung als Bleikristallgläser. Lithium kann als Karbonat oder Tetraborat bis zu maximal 0,4 Gew.% zugegeben werden, um die Viskositätskurve abzustimmen und das Einschmelzverhalten des Gemenges zu verbessern. Jedoch sollte der Lithiumoxidgehalt so gering wie möglich sein, da auch Lithium einen negativen Einfluss auf die Missfärbung hat. Zirkondioxid, Tantaloxid, Hafniumoxid, Wismutoxid, Lanthanoxid und Nioboxid können in geringen Mengen von bis zu maximal 2 Gew.% Gesamtgewicht kombiniert oder einzeln zugegeben werden, um die optischen Eigenschaften der Gläser weiter zu verbessern. Für das gezielte Einfärben der Gläser können verwendet werden: Kupferoxid (verschiedene Farben), Kobaltoxid (dunkelblau), Chromoxid (grün), Manganoxid (violett), Vanadiumoxid (grün) Molybdänoxid (verschiedene Färbungen), Nickeloxid (rot-violett), Cerdioxid (intensives gelb), Eisenoxid (gelb-grün). Durch Zugabe von Praseodymoxid in geeigneten Konzentrationen kann dem erfindungsgemäßen Glas eine fluoreszierende Eigenschaft verliehen werden. Die Fluoreszenz kann mit kurzwelligem Licht der Wellenlänge 470 nm (blau) angeregt werden. Die Gläser fluoreszieren dann rot. Kupfer-, Silber-, Selen- und Gold-Verbindungen können den erfindungsgemäßen Gläsern in entsprechenden Konzentrationen zur Kollodialfärbung zugesetzt werden, um die bekannten Rubingläser herzustellen. Fluor kann in Konzentrationen bis zu 1,5 Gew.% zugegeben werden. Fluor hat eine stark entfärbende Wirkung, so dass die Gelbfärbung hierdurch um etwa 20- 30 % verringert werden kann. Auf die Fluorzugabe sollte aber im Hinblick auf die Flusssäurebildung im Abgas und Abdampfung im Fertigungsprozess vorzugsweise verzichtet werden.

**Patentansprüche**

1. Blei- und bariumfreies Kristallglas zur manuellen oder maschinellen Herstellung hochwertiger Glasgegenstände mit einer Abbé-Zahl kleiner 48 und einem Brechungsindex von wenigstens 1,54, **dadurch gekennzeichnet, dass** es enthält:

| | |
|---|---|
| $SiO_2$ | 55,0 - 68,0 Gew.% |
| $TiO_2$ | 8,5 - 14,0 Gew.% |
| ZnO | 3,0 - 10,0 Gew.% |
| $Er_2O_3$ | 250 - 700 ppm, |

und einen Rest an Verunreinigungen und gegebenenfalls sonstigen Zusätzen und/oder Wasser, und dass es bis auf einen Verunreinigungsgehalt frei von Calcium und Magnesium ist.

2. Blei- und bariumfreies Kristallglas nach Anspruch 1, **dadurch gekennzeichnet, dass** es $SiO_2$ zu 57 - 66 Gew.%, insbesondere 59 - 65 Gew.% und vorzugsweise 61 - 64 Gew.% sowie $TiO_2$ zu 8,5 - 12 Gew.%, insbesondere 9 - 11 Gew.% enthält.

3. Blei- und bariumfreies Kristallglas nach Anspruch 1 oder 2, **dadurch gekennzeichnet, dass** es ZnO zu 5 - 10 Gew. %, insbesondere zu 6 - 9 Gew.% enthält.

4. Blei- und bariumfreies Kristallglas nach einem der vorangehenden Ansprüche, **dadurch gekennzeichnet, dass** es zusätzlich zu ZnO auch SrO bis 5 Gew.% enthält.

5. Blei- und bariumfreies Kristallglas nach einem der vorangehenden Ansprüche, **dadurch gekennzeichnet, dass** es $Na_2O$ zu 5 - 12 Gew.% und $K_2O$ zu 9 - 15 Gew.% enthält.

**6.** Blei- und bariumfreies Kristallglas nach Anspruch 5, **dadurch gekennzeichnet, dass** es $Na_2O$ zu 6 - 10 Gew.%, insbesondere zu 7 - 9 Gew.% und $K_2O$ zu 10 - 14 Gew.%, insbesondere zu 11 - 13 Gew.% enthält.

**7.** Blei- und bariumfreies Kristallglas nach Anspruch 5 oder 6, **dadurch gekennzeichnet, dass** das Verhältnis $Na_2O$: $K_2O$ = 1:1 oder kleiner, insbesondere 1:1,5 oder 1:2 ist.

**8.** Blei- und bariumfreies Kristallglas nach einem der vorangehenden Ansprüche, **dadurch gekennzeichnet, dass** neben $Er_2O_3$ als weiteres Entfärbermittel CoO zu 0,1 -6 ppm enthalten ist.

**9.** Blei und bariumfreies Kristallglas nach einem der vorangehenden Ansprüche, **dadurch gekennzeichnet, dass** zusätzlich $Nd_2O_3$ zu 0,1 - 400 ppm enthalten ist.

**10.** Blei- und bariumfreies Kristallglas nach einem der vorangehenden Ansprüche, **dadurch gekennzeichnet, dass** der Gehalt an $Fe_2O_3$ maximal 300 ppm, insbesondere weniger als 250 ppm beträgt.

**11.** Blei- und bariumfreies Kristallglas nach einem der vorangehenden Ansprüche, **dadurch gekennzeichnet, dass** $As_2O_3$ samt Oxidationsmittel bis maximal 1 Gew.% und/oder $Sb_2O_3$ samt Oxidationsmittel bis maximal 1,5 Gew.% oder die 5-wertige Stufe der entsprechenden Elemente bis maximal 1,5 Gew.% enthalten ist.

**12.** Blei- und bariumfreies Kristallglas nach einem der vorangehenden Ansprüche, **dadurch gekennzeichnet, dass** es einen Wassergehalt von 0,025 - 0,07 Gew.%, insbesondere von 0,035 - 0,06 Gew.% und vorzugsweise von 0,04 - 0,05 Gew.% enthält.

**13.** Blei- und bariumfreies Kristallglas nach einem der vorangehenden Ansprüche, **dadurch gekennzeichnet, dass** es enthält:

| | |
|---|---|
| $SiO_2$ | 63,0 - 65,0 Gew.% |
| $TiO_2$ | 8,5 - 10,0 Gew.% |
| ZnO | 5,5 - 7,0 Gew.% |
| $Na_2O$ | 7,0 - 9,0 Gew.% |
| $K_2O$ | 11,0 - 13,0 Gew.% |
| $Sb_2O_3$ | 0,6 - 0,7 Gew.% |
| CoO | 0,00025 - 0,00027 Gew.% |
| $Nd_2O_3$ | 0,004 - 0,006 Gew.% |
| $Er_2O_3$ | 0,032 - 0,034 Gew.% |

und einen Rest an Verunreinigungen und gegebenenfalls sonstigen Zusätzen und/oder Wasser.

**14.** Blei- und bariumfreies Kristallglas nach Anspruch 12, **dadurch gekennzeichnet, dass** es enthält:

| | |
|---|---|
| $SiO_2$ | 63,5 - 64,5 Gew.% |
| $TiO_2$ | 8,7 - 9,5 Gew.% |
| ZnO | 6,0 - 6,6 Gew.% |
| $Na_2O$ | 7,5 - 8,5 Gew.% |
| $K_2O$ | 11,5 -12,5 Gew.% |
| $Sb_2O_3$ | 0,62- 0,67 Gew.% |
| CoO | 0,000255 - 0,000265 Gew.% |
| $Nd_2O_3$ | 0,0045 - 0,0055 Gew.% |
| $Er_2O_3$ | 0,0325 - 0,0335 Gew.% |

und einen Rest an Verunreinigungen und gegebenenfalls sonstigen Zusätzen und/oder Wasser.

**15.** Blei- und bariumfreies Kristallglas nach Anspruch 14, **dadurch gekennzeichnet, dass** es enthält:

| | |
|---|---|
| $SiO_2$ | 63,7 - 64,2 Gew.% |

(fortgesetzt)

| | |
|---|---|
| TiO$_2$ | 8,85 - 9,25 Gew.% |
| ZnO | 6,2 - 6,4 Gew.% |
| Na$_2$O | 7,75 - 8,25 Gew.% |
| K$_2$O | 11,75 -12,25 Gew.% |
| Sb$_2$O$_3$ | 0,63- 0,66 Gew.% |
| CoO | 0,000255 - 0,000265 Gew.% |
| Nd$_2$O$_3$ | 0,0045 - 0,0055 Gew.% |
| Er$_2$O$_3$ | 0,0325 - 0,0335 Gew.% |

und einen Rest an Verunreinigungen und gegebenenfalls sonstigen Zusätzen und/oder Wasser.

**16.** Blei- und bariumfreies Kristallglas nach Anspruch 15, **dadurch gekennzeichnet, dass** es enthält:

| | |
|---|---|
| SiO$_2$ | 64,0 Gew.% |
| TiO$_2$ | 9,0 Gew.% |
| ZnO | 6,31 Gew.% |
| Na$_2$O | 8,0 Gew.% |
| K$_2$O | 12,0 Gew.% |
| Sb$_2$O$_3$ | 0,64 Gew.% |
| CoO | 0,00026 Gew.% |
| Nd$_2$O$_3$ | 0,005 Gew.% |
| Er$_2$O$_3$ | 0,033 Gew.% |

und einen Rest an Verunreinigungen und gegebenenfalls sonstigen Zusätzen und/oder Wasser.

**Claims**

**1.** Lead- and barium-free crystal glass for manual or machine manufacture of high-quality glass objects with an Abbé number of less than 48 and a refractive index of at least 1.54, **characterised in that** it contains:

| | |
|---|---|
| SiO$_2$ | 55.0-68.0 % by weight |
| TiO$_2$ | 8.5-14.0 % by weight |
| ZnO | 3.0-10.0 % by weight |
| Er$_2$O$_3$ | 250-700 ppm |

and a residue of impurities and optionally other additives and/or water, and **in that** it is free of calcium and magnesium except for a content at the level of an impurity.

**2.** Lead- and barium-free crystal glass according to claim 1, **characterised in that** it contains 57-68 % by weight, in particular 59-65 % by weight and preferably 61-64 % by weight SiO$_2$, and 8.5-12 % by weight, in particular 9-11 % by weight TiO$_2$.

**3.** Lead- and barium-free crystal glass according to claim 1 or 2, **characterised in that** it contains 5-10 % by weight, in particular 6-9 % by weight ZnO.

**4.** Lead- and barium-free crystal glass according to one of the preceding claims, **characterised in that** it additionally contains up to 5 % by weight SrO in addition to ZnO.

**5.** Lead- and barium-free crystal glass according to one of the preceding claims, **characterised in that** it contains 5-12 % by weight Na$_2$O and 9-15 % by weight K$_2$O.

**6.** Lead- and barium-free crystal glass according to claim 5, **characterised in that** it contains 6-10 % by weight, in particular 7-9 % by weight $Na_2O$ and 10-14 % by weight, in particular 11-13 % by weight $K_2O$

7. Lead- and barium-free crystal glass according to claim 5 or 6, **characterised in that** the ratio $Na_2O:K_2O= 1:1$ or less, in particular 1:1.5 or 1:2.

8. Lead- and barium-free crystal glass according to one of the preceding claims, **characterised in that** in addition to $Er_2O_3$, as a further decolourant it contains 0.1-6 ppm CoO.

9. Lead- and barium-free crystal glass according to one of the preceding claims, **characterised in that** it additionally contains 0.1 - 400 ppm $Nd_2O_3$ .

10. Lead- and barium-free crystal glass according to one of the preceding claims, **characterised in that** the content of $Fe_2O_3$ is 330 ppm maximum, in particular less than 250 ppm.

11. Lead- and barium-free crystal glass according to one of the preceding claims, **characterised in that** up to 1 % by weight maximum $As_2O_3$ together with up to 1.5 % by weight maximum oxidation agent is added, or the 5-valency stage of the corresponding elements is added up to a maximum of 1.5 % by weight.

12. Lead- and barium-free crystal glass according to one of the preceding claims, **characterised in that** it contains a water content of 0.025-0.07 % by weight, in particular 0.035-0.06 % by weight and preferably 0.04-0.05 % by weight.

13. Lead- and barium-free crystal glass according to one of the preceding claims, **characterised in that** it contains:

| | |
|---|---|
| $SiO_2$ | 63.0-65.0 % by weight |
| $TiO_2$ | 8.5-10.0 % by weight |
| ZnO | 5.5-7.0 % by weight |
| $Na_2O$ | 7.0-9.0 % by weight |
| $K_2O$ | 11.0-13.0 % by weight |
| $Sb_2O_3$ | 0.6-.0.7 % by weight |
| CoO | 0.00025-0.00027 % by weight |
| $Nd_2O_3$ | 0.004-0.006 % by weight |
| $Er_2O_3$ | 0.032-0.034 % by weight |

and a residue of impurities and optionally other additives and/or water.

14. Lead- and barium-free crystal glass according to claim 12, **characterised in that** it contains:

| | |
|---|---|
| $SiO_2$ | 63.5-64.5 % by weight |
| $TiO_2$ | 8.7-9.5 % by weight |
| ZnO | 6.0-6.6 % by weight |
| $Na_2O$ | 7.5-8.5 % by weight |
| $K_2O$ | 11.5-12.5 % by weight |
| $Sb_2O_3$ | 0.62-.0.67 % by weight |
| CoO | 0.000255-0.000265 % by weight |
| $Nd_2O_3$ | 0.0045-0.0055 % by weight |
| $Er_2O_3$ | 0.0325-0.0335 % by weight |

and a residue of impurities and optionally other additives and/or water.

15. Lead- and barium-free crystal glass according to claim 14, **characterised in that** it contains:

| | |
|---|---|
| $SiO_2$ | 63.7-64.2 % by weight |
| $TiO_2$ | 8.85-9.25 % by weight |
| ZnO | 6.2-6.4 % by weight |
| $Na_2O$ | 7.75-8.25 % by weight |

(continued)

| | |
|---|---|
| K$_2$O | 11.75-12.25 % by weight |
| Sb$_2$O$_3$ | 0.63-.0.66 % by weight |
| CoO | 0.000255-0.000265 % by weight |
| Nd$_2$O$_3$ | 0.0045-0.0055 % by weight |
| Er$_2$O$_3$ | 0.0325-0.0335 % by weight |

and a residue of impurities and optionally other additives and/or water.

16. Lead- and barium-free crystal glass according to claim 15, **characterised in that** it contains:

| | |
|---|---|
| SiO$_2$ | 64.0 % by weight |
| TiO$_2$ | 9.0 % by weight |
| ZnO | 6.31 % by weight |
| Na$_2$O | 8.0 % by weight |
| K$_2$O | 12.0 % by weight |
| Sb$_2$O$_3$ | 0.64 % by weight |
| CoO | 0.00026 % by weight |
| Nd$_2$O$_3$ | 0.005 % by weight |
| Er$_2$O$_3$ | 0.033 % by weight |

and a residue of impurities and optionally other additives and/or water.

**Revendications**

1. Cristal sans plomb, ni baryum pour la fabrication manuelle ou à la machine d'objets en verre de haute valeur avec un nombre d'Abbé inférieur à 48 et un indice de réfraction d'au moins 1,54, **caractérisé en ce qu'**il contient :

| | |
|---|---|
| SiO$_2$ | 55,0-68,0% en poids |
| TiO$_2$ | 8,5-14,0% en poids |
| ZnO | 3,0-10,0% en poids |
| Er$_2$O$_3$ | 250-700 ppm, |

et le reste consiste en des impuretés et le cas échéant, d'autres additifs et/ou de l'eau, et **en ce qu'**il est exempt de calcium et de magnésium, jusqu'à une teneur à titre d'impureté.

2. Cristal sans plomb, ni baryum selon la revendication 1, **caractérisé en ce qu'**il contient SiO$_2$ à 57 - 66% en poids, en particulier à 59 - 65% en poids et de préférence, 61 - 64% en poids, ainsi que TiO$_2$ à 8,5 - 12% en poids, en particulier 9 - 11% en poids.

3. Cristal sans plomb, ni baryum selon la revendication 1 ou 2, **caractérisé en ce qu'**il contient ZnO à 5 - 10% en poids, en particulier 6 - 9% en poids.

4. Cristal sans plomb, ni baryum selon l'une des revendications précédentes, **caractérisé en ce qu'**il contient en plus du ZnO, également SrO à jusqu'à 5% en poids.

5. Cristal sans plomb, ni baryum selon l'une des revendications précédentes, **caractérisé en ce qu'**il contient Na$_2$O à 5 - 12% en poids et K$_2$O à 9 -15% en poids.

6. Cristal sans plomb, ni baryum selon la revendication 5, **caractérisé en ce qu'**il contient Na$_2$O à 6 - 10% en poids, en particulier 7 - 9% en poids et K$_2$O à 10 - 14% en poids, en particulier 11 - 13% en poids.

7. Cristal sans plomb, ni baryum selon la revendication 5 ou 6, **caractérisé en ce que** le rapport Na$_2$O:K$_2$O = 1,1 ou

moins, en particulier 1:1,5 ou 1:2.

**8.** Cristal sans plomb, ni baryum selon l'une des revendications précédentes, **caractérisé en ce qu'**outre $Er_2O_3$, comme autre agent décolorant, CoO est présent à 0,1 - 6 ppm.

**9.** Cristal sans plomb, ni baryum selon l'une des revendications précédentes, **caractérisé en ce qu'**en outre, $Nd_2O_3$ est présent à 0,1 - 400 ppm.

**10.** Cristal sans plomb, ni baryum selon l'une des revendications précédentes, **caractérisé en ce que** la teneur en $Fe_2O_3$ s'élève à maximum 300 ppm, en particulier à moins de 250 ppm.

**11.** Cristal sans plomb, ni baryum selon l'une des revendications précédentes, **caractérisé en ce que** $As_2O_3$ accompagné d'un oxydant, est présent à jusqu'à maximum 1% en poids, et/ou $Sb_2O_3$ accompagné d'un oxydant, est présent à jusqu'à maximum 1,5% en poids ou l'état pentavalent des éléments correspondants jusqu'à maximum 1,5% en poids.

**12.** Cristal sans plomb, ni baryum selon l'une des revendications précédentes, **caractérisé en ce qu'**il présente une teneur en eau de 0,025 - 0,07% en poids, en particulier de 0,035 - 0,06% en poids et de préférence, de 0,04 - 0,05% en poids.

**13.** Cristal sans plomb, ni baryum selon l'une des revendications précédentes, **caractérisé en ce qu'**il contient :

| | |
|---|---|
| $SiO_2$ | 63,0-65,0% en poids |
| $TiO_2$ | 8,5-10,0% en poids |
| ZnO | 5,5-7,0% en poids |
| $Na_2O$ | 7,0-9,0% en poids |
| $K_2O$ | 11,0-13,0% en poids |
| $Sb_2O_3$ | 0,6-0,7% en poids |
| CoO | 0,00025-0,00027% en poids |
| $Nd_2O_3$ | 0,004-0,006% en poids |
| $Er_2O_3$ | 0,032-0,034% en poids, |

et le reste consiste en des impuretés et le cas échéant, d'autres additifs et/ou de l'eau.

**14.** Cristal sans plomb, ni baryum selon la revendication 12, **caractérisé en ce qu'**il contient :

| | |
|---|---|
| $SiO_2$ | 63,5-64,5% en poids |
| $TiO_2$ | 8,7-9,5% en poids |
| ZnO | 6,0-6,6% en poids |
| $Na_2O$ | 7,5-8,5% en poids |
| $K_2O$ | 11,5-12,5% en poids |
| $Sb_2O_3$ | 0,62-0,67% en poids |
| CoO | 0,000255-0,000265% en poids |
| $Nd_2O_3$ | 0,0045-0,0055% en poids |
| $Er_2O_3$ | 0,0325-0,0335% en poids, |

et le reste consiste en des impuretés et le cas échéant, d'autres additifs et/ou de l'eau.

**15.** Cristal sans plomb, ni baryum selon la revendication 14, **caractérisé en ce qu'**il contient :

| | |
|---|---|
| $SiO_2$ | 63,7-64,2% en poids |
| $TiO_2$ | 8,85-9,25% en poids |
| ZnO | 6,2-6,4% en poids |
| $Na_2O$ | 7,75-8,25% en poids |

(suite)

| | |
|---|---|
| $K_2O$ | 11,75-12,25% en poids |
| $Sb_2O_3$ | 0,63-0,66% en poids |
| CoO | 0,000255-0,000265% en poids |
| $Nd_2O_3$ | 0,0045-0,0055% en poids |
| $Er_2O_3$ | 0,0325-0,0335% en poids, |

et le reste consiste en des impuretés et le cas échéant, d'autres additifs et/ou de l'eau.

**16.** Cristal sans plomb, ni baryum selon la revendication 15, **caractérisé en ce qu'**il contient :

| | |
|---|---|
| $SiO_2$ | 64,0% en poids |
| $TiO_2$ | 9,0% en poids |
| ZnO | 6,31 % en poids |
| $Na_2O$ | 8,0% en poids |
| $K_2O$ | 12,0% en poids |
| $Sb_2O_3$ | 0,64% en poids |
| CoO | 0,00026% en poids |
| $Nd_2O_3$ | 0,005% en poids |
| $Er_2O_3$ | 0,033% en poids, |

et le reste consiste en des impuretés et le cas échéant, d'autres additifs et/ou de l'eau.

**FIG. 1**

**FIG. 2**

+ b ( gelb )

3

0ppm
250ppm  500ppm  750ppm  1000ppm

Erbiumverschiebung

1ppm ■

2ppm ■

− a ( grün )                                      farblos                    + a ( rot )

−1,5                                  0                0 0                           1,5

3ppm ■

Cobaltverschiebung

5ppm ■

−3

− b ( blau )

FIG. 3

FIG. 4

FIG. 5

FIG. 6

FIG. 7

FIG. 8

EP 1 431 255 B1

FIG. 9

EP 1 431 255 B1

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19936699 C2
- GB 2280432 A
- WO 9513993 A